# EUROPÄISCHE PATENTSCHRIFT

(11) **EP 2 018 288 B1**
(45) Veröffentlichungstag und Bekanntmachung des Hinweises auf die Patenterteilung: **29.02.2012**
(21) Anmeldenummer: 07724600.7
(22) Anmeldetag: 26.04.2007
(51) Int. Cl.: B60J 7/22

(54) **VORRICHTUNG ZUM FÜHREN DER BEWEGUNG EINES WINDABWEISERS**
DEVICE FOR GUIDING THE MOVEMENT OF A WIND DEFLECTOR
DISPOSITIF POUR GUIDER LE MOUVEMENT D'UN DÉFLECTEUR D'AIR

(30) Priorität: 19.05.2006 DE 102006023911
(43) Veröffentlichungstag der Anmeldung: 28.01.2009
(73) Patentinhaber: Daimler AG, 70327 Stuttgart (DE)
(72) Erfinder: FIDAN, Serkan, 71063 Sindelfingen (DE); PLOCHER, Bernd, 72108 Rottenburg (DE)
(74) Vertreter: JENSEN & SON
(86) Internationale Anmeldenummer: PCT/EP2007/003670
(87) Internationale Veröffentlichungsnummer: WO 2007/134694

(56) Entgegenhaltungen:
- EP-A2- 0 895 889
- DE-A1- 3 743 476
- DE-A1- 10 217 659
- DE-A1-102004 027 087
- DE-A1-102004 052 715
- DE-C1- 19 603 670
- US-A- 4 492 406

## Beschreibung

Die Erfindung betrifft eine Vorrichtung zum Führen einer Bewegung eines lamellenförmigen Windabweisers gegenüber einem Dachrahmen in einem Bereich zwischen einer Gebrauchsstellung und einer Nichtgebrauchsstellung, insbesondere an einem Cabriolet.

Zur Vermeidung von Luftzug und Verwirbelungen sind an Cabriolets häufig Windabweiser vorgesehen. Zur Anpassung an verschiedene Betriebsbedingungen, z.B. Fahren mit geöffnetem oder geschlossenem Verdeck, können diese Windabweiser verstellbar zwischen einer Gebrauchsstellung in einer maximalen Entfernung zu einem Dachrahmen, beispielsweise dem Dachrahmen eines Cabriolets, und einer Nichtgebrauchsstellung in der Nähe des Dachrahmens ausgebildet sein.

Aus der DE 38 33 046 A1 ist ein Kraftfahrzeug mit Cabrioletverdeck und Windabweiser bekannt, bei dem ein Windabweiser an einem vorderen Dachquerträger angeordnet ist und mittels einer Hebeeinrichtung zwischen einer Ruhelage und einer Wirklage verstellbar ist. Das Verstellen erfolgt jedoch in einer Schwenkbewegung, bei der der Winkel des Windleitelementes sich ändert, was aerodynamisch ungünstig ist.

Ferner offenbaren EP 0 895 889 und US 4 492 406 weitere in einem Cabriolet-Fahrzeugs eingesetzte Windabweisen.

Es ist Aufgabe der Erfindung, eine verbesserte Vorrichtung zum Führen einer Bewegung eines lamellenförmigen Windabweisers gegenüber einem Dachrahmen in einem Bereich zwischen einer Gebrauchsstellung und einer Nichtgebrauchsstellung anzugeben.

Die Aufgabe wird erfindungsgemäß gelöst durch eine Vorrichtung mit den Merkmalen des Anspruchs 1.

Vorteilhafte Ausgestaltungen der Erfindung sind Gegenstand der Unteransprüche.

Erfindungsgemäß sind zwei Drehhebel, die nur in Richtung der Drehachsen zueinander versetzt sind, in der Nähe je eines Endes des Windabweisers angeordnet. Weiter ist ein angetriebener Drehhebel in einem mittleren Bereich des Windabweisers angeordnet und in Richtung einer Normalen einer der Drehachsen zu den zwei Drehhebeln versetzt. Jeder der beiden an den Enden angeordneten Drehhebel bildet ein Paar mit dem angetriebenen Drehhebel. Dabei überdecken die Parallelogramme der Paare in Blickrichtung der Drehachsen einander vollständig. Auf diese Weise wird eine hohe Stabilität der Anordnung gegen Verwindung erreicht, die bei Verwendung von nur zwei Drehhebeln insgesamt auftreten würde, wenn diese in einem großen Abstand voneinander am Windabweiser angeordnet sind.

Die nicht angetriebenen Drehhebel sind an einem ersten Drehhebelende mittels je einer ersten Drehachse am Windabweiser drehbar gelagert. An einem zweiten Drehhebelende sind die Drehhebel mittels je einer zweiten Drehachse am Dachrahmen drehbar gelagert. Der Dachrahmen kann beispielsweise der Dachrahmen eines Cabriolets sein. Alle Drehachsen liegen einander parallel. Die Drehhebel des Paares sind zumindest in Richtung einer Normalen einer der Drehachsen zueinander versetzt angeordnet. Die Querschnittsfläche zwischen den Drehachsen des Paares bildet ein Parallelogramm mit den Drehachsen als Eckpunkte. Eine solche Anordnung der Drehachsen ermöglicht das Parallelverschieben des Windabweisers. Ein Verkippen des Windabweisers wird vermieden, da der Windabweiser auf diese Weise selbst Teil des Parallelogramms ist.

Bevorzugt werden mehrere Paare von Drehhebeln gebildet, so dass ihre Drehachsen im Querschnitt die Eckpunkte jeweils eines Parallelogramms pro Paar bilden. Dabei kann ein Drehhebel mehreren Paaren angehören. Die sich ergebenden Parallelogramme können deckungsgleich sein und/oder sich, aufeinander projiziert, zumindest teilweise überdecken.

Vorzugsweise wird der im mittleren Bereich angeordnete Drehhebel über seine zweite Drehachse angetrieben. Bei drei Drehhebeln können die Drehhebel beispielsweise äquidistant am Windabweiser angeordnet werden.

Bevorzugt erfolgt der Antrieb des im mittleren Bereich angeordneten Drehhebels mittels eines Kurbelarms. Ein solcher Kurbelarm kann beispielsweise ein erstes Kurbelarmende und ein zweites Kurbelarmende aufweisen. An seinem ersten Kurbelarmende ist der Kurbelarm drehbar um eine im Wesentlichen parallel zu den Drehachsen liegende, am Dachrahmen angeordnete Kurbelarmachse gelagert. An seinem zweiten Kurbelarmende weist der Kurbelarm einen rotationssymmetrischen Zapfen auf, der in ein Langloch oder eine Nut eingreift, die an dem angetriebenen Drehhebel vorgesehen ist. Ein solcher Antrieb eignet sich besonders, um eine Drehbewegung beispielsweise eines den Kurbelarm antreibenden Elektromotors in eine geradlinige Bewegung umzuwandeln, wie sie von dem Windabweiser ausgeführt werden soll.

Vorzugsweise weist der Windabweiser eine Gebrauchsstellung in einer maximalen Entfernung vom Dachrahmen und eine Nichtgebrauchsstellung nahe am Dachrahmen auf, in denen sie arretierbar oder verriegelbar ist. Eine solche Arretierung kann durch Halteklammern oder ähnliche Einrichtungen erfolgen, die einen erhöhten Kraftaufwand erfordern, um die jeweilige Stellung zu verlassen. Besonders in der Gebrauchsstellung kann die Arretierung erfolgen, indem der Kurbelarm senkrecht zu dem Langloch oder der Nut steht, so dass das Gestänge aus Drehhebel und Kurbelarm selbstsperrend ist. Außerdem kann, beispielsweise in der Nichtgebrauchsstellung eine Endlagenverriegelung zumindest eines Drehhebels mittels federbelasteter Bolzen erfolgen, die mittels eines Seilzuges gesteuert werden, der beispielsweise durch einen Leerhub des in der Nichtgebrauchsstellung befindlichen Kurbelarms betätigt wird.

Die Verwendung von zwei angetriebenen Drehhebeln im mittleren Bereich des Windabweisers, die nur in Richtung der Drehachsen zueinander versetzt sind, verbessert die Stabilität zusätzlich. Der Antrieb der Drehhebel kann gemeinsam erfolgen, beispielsweise durch eine gemeinsame zweite Drehachse oder durch miteinander verbundene Kurbelarme.

Der Windabweiser kann gekrümmt sein, um einer vorgegebenen Form des Dachrahmens zu folgen. So ist sowohl eine sichelartige Krümmung über eine Kante des Windabweisers als auch eine Krümmung oder Wölbung der Fläche des Windabweisers oder eine Kombination möglich. In beiden Fällen vereinfacht sich der gewünschte Versatz der Drehhebel im Bereich der Enden gegenüber denen im mittleren Bereich.

Zur Vermeidung von Luftverwirbelungen kann es vorteilhaft sein, ein feinmaschiges Gewebe zwischen dem Windabweiser und dem Dachrahmen anzuordnen.

Dieses ist bevorzugt am Windabweiser oder dem Dachrahmen in der Art eines Rollos aufrollbar, so dass es nicht im Wege ist oder eingeklemmt wird, wenn der Windabweiser in die Nichtgebrauchsstellung bewegt wird.

Ein Ausführungsbeispiel der Erfindung wird im Folgenden anhand von Zeichnungen näher erläutert.

Dabei zeigen:
- Fig. 1: eine Seitenansicht einer Vorrichtung zum Führen einer Bewegung eines lamellenförmigen Windabweisers, der in einer Gebrauchsstellung ist,
- Fig. 2: eine Seitenansicht einer Vorrichtung zum Führen einer Bewegung eines lamellenförmigen Windabweisers, der in einer Nichtgebrauchsstellung ist,
- Fig. 3: eine perspektivische Ansicht einer als Windabweiser dienenden Lamelle mit einer Vorrichtung zum Verstellen der Lamelle.

Einander entsprechende Teile sind in allen Figuren mit den gleichen Bezugszeichen versehen.

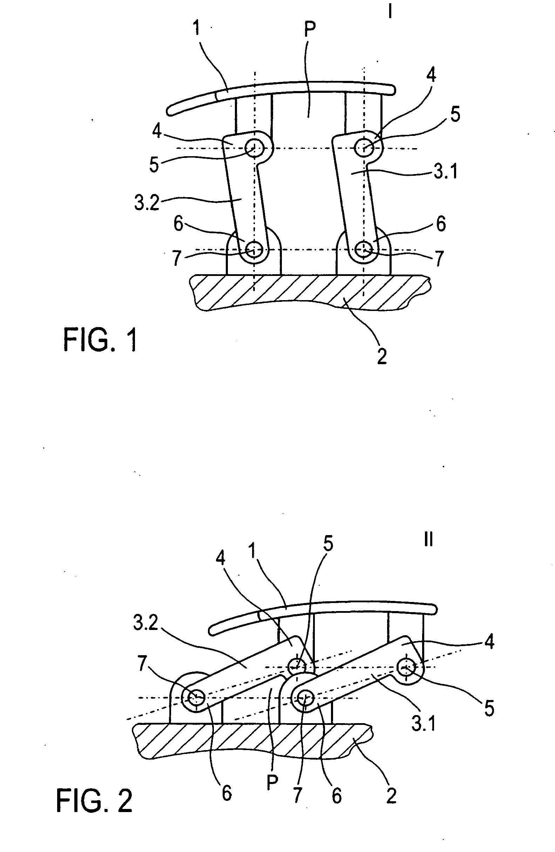

In Figur 1 ist eine Seitenansicht einer Vorrichtung zum Führen einer Bewegung eines lamellenförmigen Windabweisers 1 gegenüber einem Dachrahmen 2 gezeigt, wobei der Windabweiser 1 in einer Gebrauchsstellung I in einer maximalen Entfernung vom Dachrahmen 2 ist. Der Windabweiser 1 ist an seiner links im Bild liegende Kante konvex gekrümmt. Der Dachrahmen 2 kann der Dachrahmen eines Cabriolets sein.

Am Windabweiser 1 zwischen diesem und dem Dachrahmen 2 ist eine ein Paar von Drehhebeln 3.1, 3.2 umfassende Drehhebelanordnung erkennbar, wobei die Drehhebel 3.1, 3.2 an einem ersten Drehhebelende 4 mittels je einer ersten Drehachse 5 am Windabweiser 1 drehbar gelagert sind.

An einem zweiten Drehhebelende 6 sind die Drehhebel 3.1, 3.2 mittels je einer zweiten Drehachse 7 am Dachrahmen 2 drehbar gelagert. Alle Drehachsen liegen einander parallel. Die Drehhebel 3.1, 3.2 des Paares sind in Richtung einer Normalen einer der Drehachsen 5 bzw. 7 zueinander versetzt angeordnet. Außerdem sind die Drehhebel 3.1, 3.2 axial versetzt, so dass der rechte Drehhebel 3.1 bei einem Ende des Windabweisers 1 und der linke Drehhebel 3.2 in einem mittleren Bereich des Windabweisers 1 angeordnet ist.

Die Drehachsen 5, 7 des Paares bilden die Eckpunkte eines Parallelogramms P.

An einem anderen Ende des Windabweisers 1 ist ein weiterer Drehhebel 3.1 so angeordnet, dass er zum rechten Drehhebel 3.1 lediglich axial versetzt ist (Nicht abgebildet, da vom rechten Drehhebel 3.1 verdeckt). Ein von dem weiteren Drehhebel 3.1 mit dem linken Drehhebel 3.2 gebildetes Parallelogramm P überdeckt sich somit vollständig mit dem gezeigten Parallelogramm P.

Somit bilden die zwischen dem Windabweiser 1 und dem Dachrahmen 2 angeordneten Drehhebel 3.1 und 3.2 ein Parallelogrammgestänge zur Bewegungssteuerung des Windabweisers 1. Eine solche Anordnung der Drehhebel 3.1 und 3.2 und deren Drehachsen 5, 7 ermöglicht das Parallelverschieben des Windabweisers 1. Ein Verkippen des Windabweisers 1 um eine Längsachse wird vermieden, da der Windabweiser 1 auf diese Weise selbst eine Seite des Parallelogramms P darstellt. Bevorzugt ist der Drehhebel 3.2 angetrieben, beispielsweise mittels eines Kurbelarms (nicht gezeigt).

In Figur 2 ist eine Seitenansicht die Vorrichtung zum Führen der Bewegung des lamellenförmigen Windabweisers 1 gegenüber dem Dachrahmen 2 aus Figur 1 gezeigt, wobei der Windabweiser 1 in einer Nichtgebrauchsstellung II in der Nähe des Dachrahmens 2 ist. Zu diesem Zweck wurden die Drehhebel 3.1, 3.2 im Uhrzeigersinn geschwenkt.

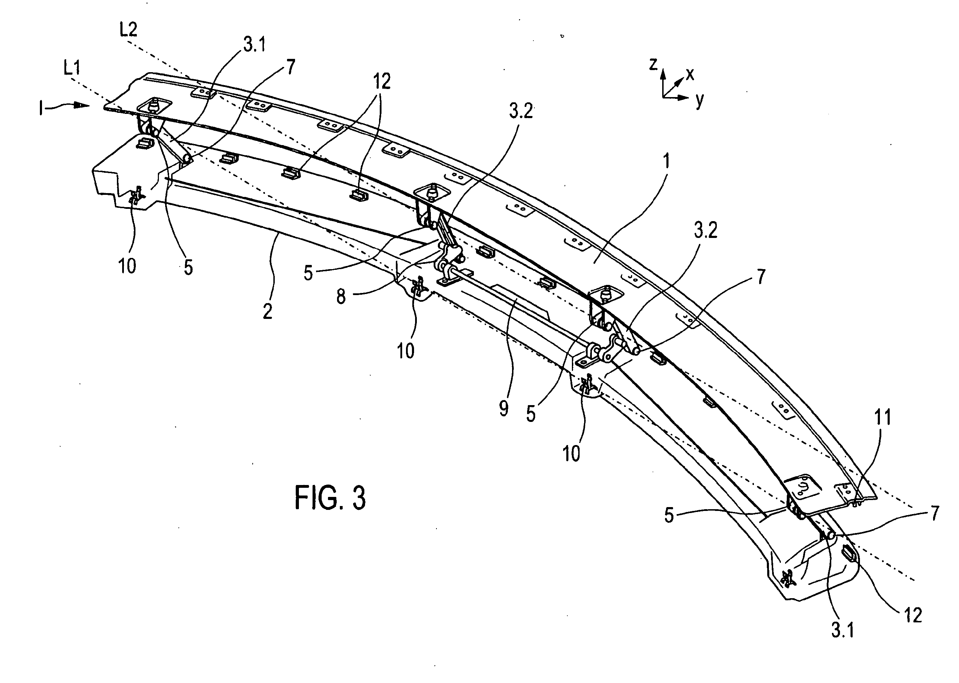

In Figur 3 ist eine perspektivische Ansicht eines lamellenförmigen Windabweisers 1 mit einer Vorrichtung zum Führen einer Bewegung eines lamellenförmigen Windabweisers 1 gegenüber einem Dachrahmen 2 gezeigt. Der Windabweiser 1 befindet sich in einer Gebrauchsstellung I in einer maximalen Entfernung zu einem Dachrahmen 2.

Der Windabweiser 1 ist um seine am Fahrzeug nach hinten zeigende, in der Figur nach links unten weisende Kante gekrümmt.

Am Windabweiser 1 sind vier Drehhebel 3.1, 3.2 vorgesehen, von denen zwei Drehhebel 3.1 in der Nähe jeweils eines Endes des Windabweisers 1 und zwei Drehhebel 3.2 in einem zentralen Bereich des Windabweisers 1 angeordnet sind.

Die Drehhebel 3.2 im zentralen Bereich verfügen über einen Antrieb in Form von Kurbelarmen 8 mit einer gemeinsamen Kurbelarmachse 9. Die Drehhebel 3.1 in der Nähe der Enden des Windabweisers 1 sind im gezeigten Ausführungsbeispiel nicht angetrieben.

Die Drehhebel 3.1 sind nur axial zueinander versetzt, gegenüber den Drehhebeln 3.2 jedoch axial und radial, also in Richtung einer Normalen einer der Drehachsen 5, 7. Die Drehhebel 3.2 wiederum sind zueinander nur axial versetzt, so dass alle Paare von Drehhebeln 3.1, 3.2, die sich bilden lassen, zu sich vollständig überdeckenden Parallelogrammen führen, wie in Figur 1 gezeigt wurde.

Die erste Linie L1, die die ersten Drehachsen 5 der Drehhebel 3.1 verbindet, und die zweite Linie L2, die die ersten Drehachsen 5 der Drehhebel 3.2 verbindet, verdeutlichen den radialen Versatz der Drehhebel 3.1, 3.2.

Am Dachrahmen 2 sind Halteklammern 10 vorgesehen, in die die ersten Drehachsen 5 gleiten, wenn der Windabweiser 1 in eine Nichtgebrauchsstellung II in der Nähe des Dachrahmens 2 bewegt wird. Der Windabweiser 1 wird dort so gehalten, dass er nicht durch Fahrtwind oder andere Kräfte unbeabsichtigt die Nichtgebrauchsstellung II verlässt. An der Vorderkante des Windabweisers 1 sind weitere Haltevorrichtungen 11 für diesen Zweck vorgesehen, deren Gegenstücke 12 am Dachrahmen angeordnet sind.

Um die Lamelle in der Nichtgebrauchsstellung II zu fixieren, können insbesondere an den Drehhebeln 3.1, jedoch auch an den Drehhebeln 3.2, Verriegelungsvorrichtungen vorgesehen sein. Eine Verriegelungsvorrichtung umfasst an jedem Drehhebel 3.1 bevorzugt einen federbelasteten Bolzen (nicht dargestellt), der seitlich in geeigneter Weise in den Drehhebel 3.1 eingreift, um ihn zu arretieren. Der Bolzen wird beispielsweise mittels eines Seilzuges betätigt, der an einem Kurbelarm 8 so angeordnet ist, dass der Bolzen den Drehhebel 3.1 arretiert, wenn sich der Kurbelarm 8 in der Nichtgebrauchsstellung II befindet und einen Leerhub ausführt.

Zur Vermeidung von Luftverwirbelungen kann ein feinmaschiges Gewebe zwischen dem Windabweiser 1 und dem Dachrahmen 2 angeordnet sein.

Dieses ist bevorzugt am Windabweiser 1 und/oder dem Dachrahmen 2 in der Art eines Rollos aufrollbar, so dass es nicht im Wege ist oder eingeklemmt wird, wenn der Windabweiser 1 in die Nichtgebrauchsstellung II bewegt wird.

## Patentansprüche

1. Vorrichtung zum Führen einer Bewegung eines Iamellenförmigen Windabweiser (1) gegenüber einem Dachrahmen (2) in einem Bereich zwischen einer Gebrauchsstellung (I) und einer Nichtgebrauchsstellung (II) mittels einer Drehhebelanordnung,
mit zwischen dem Windabweiser (1) und dem Dachrahmen (2) vorgesehenen Drehhebeln (3.1, 3.2), die an einem ersten Drehhebelende (4) mittels je einer ersten Drehachse (5) am Windabweiser (1) drehbar gelagert sind und an einem zweiten Drehhebelende (6) mittels je einer zweiten Drehachse (7) am Dachrahmen (2) drehbar gelagert sind und alle Drehachsen (5, 7) zueinander parallel liegen,
**dadurch gekennzeichnet, dass**
zwei Drehhebel (3.1), die nur in Richtung der Drehachsen (7) zueinander versetzt sind, in der Nähe je eines Endes des Windabweisers (1) angeordnet sind,
mit mindestens einem angetriebenen Drehhebel (3.2), der in einem mittleren Bereich des Windabweisers (1) angeordnet ist und in Richtung einer Normalen einer der Drehachsen (7) zu den zwei anderen Drehhebeln (3.1) versetzt ist,
wobei jeder der beiden an den Enden angeordneten Drehhebel (3.1) ein Paar mit dem angetriebenen Drehhebel (3.2) bildet,
und wobei die jeweiligen Drehhebelpaare in Blickrichtung der Drehachsen (5.7) ein Parallelogrammgestänge bilden und die so in Blickrichtung der Drehachsen (5, 7) gebildeten Parallelogramme der Drehhebelpaare einander vollständig überdecken.

2. Vorrichtung nach Anspruch 1,
**dadurch gekennzeichnet, dass**
die Drehachsen (5, 7) mehrerer Paare von Drehhebeln (3.1, 3.2) im Querschnitt die Eckpunkte jeweils eines Parallelogramms (P) pro Paar bilden, wobei ein Drehhebel (3.1, 3.2) mehreren Paaren angehören kann und deckungsgleiche Parallelogramme (P) auftreten können und die Parallelogramme (P) einander teilweise oder vollständig überdecken können.

3. Vorrichtung nach einem der Ansprüche 1 bis 2,
**dadurch gekennzeichnet, dass**
der angetriebene Drehhebel (3.2) über seine zweite Drehachse (7) angetrieben ist.

4. Vorrichtung nach Anspruch 2,
**dadurch gekennzeichnet, dass**
der angetriebene Drehhebel (3.2) mittels eines Kurbelarmes (8) antreibbar ist.

5. Vorrichtung nach einem der vorhergehenden Ansprüche,
**dadurch gekennzeichnet, dass**
der Windabweiser (1) in einer Gebrauchsstellung (I) und/oder in einer Nichtgebrauchsstellung (II) arretierbar und/oder verriegelbar ist.

6. Vorrichtung nach Anspruch 5,
**dadurch gekennzeichnet, dass**
im mittleren Bereich des Windabweisers (1) zwei angetriebene Drehhebel (3.1, 3.2) angeordnet und nur in Richtung der Drehachsen (5, 7) zueinander versetzt sind.

7. Vorrichtung nach einem der Ansprüche 1 bis 6,
**dadurch gekennzeichnet, dass**
der Windabweiser (1) gekrümmt ist.

8. Vorrichtung nach einem der Ansprüche 1 bis 7,
**dadurch gekennzeichnet, dass**
ein feinmaschiges Gewebe zwischen dem Windabweiser (1) und dem Dachrahmen (2) angeordnet ist.

9. Vorrichtung nach Anspruch 8,
**dadurch gekennzeichnet, dass**
das feinmaschige Gewebe an dem Windabweiser (1) und/oder an dem Dachrahmen (2) aufrollbar ist.

## Claims

1. Device for guiding the movement of a lamellar wind deflector (1) relative to a roof rail (2) in a range between a position of use (I) and position of non-use (II) by means of a rotary lever arrangement,
comprising rotary levers (3.1, 3.2) provided between the wind deflector (1) and the roof rail (2), which are rotatably mounted on the wind deflector (1) at a first rotary lever end (4) by means of a first axis of rotation (5) each, and which are rotatably mounted on the roof rail (2) at a second rotary lever end (6) by means of a second axis of rotation (7) each, all of the axes of rotation (5, 7) extending parallel to one another, **characterised in that**
two rotary levers (3.1), which are offset relative to each other only in the direction of the axis of rotation (7), are located near one end each of the wind deflector (1),
with at least one driven rotary lever (3.2), which is located in a central region of the wind deflector (1) and offset with respect to the two other rotary levers (3.1) in the direction of a normal of one of the axes of rotation (7),
wherein each of the two rotary levers (3.1) located at the ends forms a pair with the driven rotary lever (3.2),
and wherein each pair of rotary levers forms, in the viewing direction of the axes of rotation (5, 7), a parallelogram linkage and the parallelograms of the pairs of rotary levers so formed in the viewing direction of the axes of rotation (5, 7) completely overlap each other.

2. Device according to claim 1,
**characterised in that**
the axes of rotation (5, 7) of several pairs of rotary levers (3.1, 3.2) form in cross-section the corner points of one parallelogram (P) each per pair, wherein a rotary lever (3.1, 3.2) may belong to several pairs and congruent parallelograms (P) may occur, and wherein the parallelograms (P) may overlap each other partially or completely.

3. Device according to claim 1 or 2,
**characterised in that**
the driven rotary lever (3.2) is driven by way of its second axis of rotation (7).

4. Device according to claim 2,
**characterised in that**
the driven rotary lever (3.2) can be driven by means of a crank arm (8).

5. Device according to any of the preceding claims,
**characterised in that**
the wind deflector (1) can be located and/or locked in a position of use (I) and/or a position of non-use (II).

6. Device according to claim 5,
**characterised in that**
in the central region of the wind deflector (1) two driven rotary levers (3.1, 3.2) are provided and only offset relative to each other in the direction of the axes of rotation (5, 7).

7. Device according to any of claims 1 to 6,
**characterised in that**
the wind deflector (1) is curved.

8. Device according to any of claims 1 to 7,
**characterised in that**
a fine-mesh fabric is provided between the wind deflector (1) and the roof rail (2).

9. Device according to claim 8,
**characterised in that**
the fine-mesh fabric can be reeled on the wind deflector (1) and/or the roof rail (2).

## Revendications

1. Dispositif servant à guider un mouvement d'un déflecteur d'air (1) en forme de lamelle par rapport à un cadre de toit (2) dans une région s'étendant entre une position d'utilisation (I) et une position de non-utilisation (II) au moyen d'un système de leviers rotatifs, doté entre le déflecteur d'air (1) et le cadre de toit (2) de leviers rotatifs (3.1, 3.2) qui sont montés sur le déflecteur d'air (1) de manière à pivoter sur une première extrémité (4) de levier rotatif grâce à un premier axe de rotation (5) et qui sont montés sur le cadre de toit (2) de manière à pivoter sur une deuxième extrémité (6) de levier rotatif grâce à un second axe de rotation (7), et tous les axes de rotation (5, 7) étant parallèles entre eux, **caractérisé en ce que** deux leviers rotatifs (3.1), qui sont décalés l'un par rapport à l'autre uniquement dans le sens des axes de rotation (7), sont disposés à proximité de chaque extrémité du déflecteur d'air (1), dont au moins un levier rotatif (3.2) entraîné se trouve dans la région médiane du déflecteur d'air (1) et est décalé par rapport aux deux autres leviers rotatifs (3.1) dans le sens d'une normale d'un des axes de rotation (7),
chacun des deux leviers rotatifs (3.1) disposés sur les extrémités formant une paire avec le levier rotatif (3.2) entraîné, et les paires de leviers rotatifs dans le sens d'observation des axes de rotation (5, 7) formant une tige en parallélogramme et les parallélogrammes des paires de leviers rotatifs ainsi formés dans la direction des axes de rotation (5, 7) se superposent entièrement.

2. Dispositif selon la revendication 1, **caractérisé en ce que** les axes de rotation (5, 7) de plusieurs paires de leviers rotatifs (3.1, 3.2) forment dans la section transversale les sommets d'un parallélogramme (P) pour chaque paire, un levier rotatif (3.1, 3.2) pouvant faire partie de plusieurs paires et des parallélogrammes (P) égaux pouvant se former et lesdits parallélogrammes (P) pouvant se superposer partiellement ou entièrement.

3. Dispositif selon l'une quelconque des revendications 1 à 2, **caractérisé en ce que** le levier rotatif (3.2) est entraîné par son second axe de rotation (7).

4. Dispositif selon la revendication 2, **caractérisé en ce que** le levier rotatif (3.2) entraîné peut être entraîné au moyen d'un bras de manivelle (8).

5. Procédé selon l'une quelconque des revendications précédentes, **caractérisé en ce que** le déflecteur d'air (1) peut être bloqué et / ou verrouillé dans une position d'utilisation (I) et / ou dans une position de non-utilisation (II).

6. Dispositif selon la revendication 5, **caractérisé en ce que** deux leviers rotatifs (3.1, 3.2) entraînés sont disposés dans la région médiane du déflecteur d'air (1) et sont décalés l'un par rapport à l'autre uniquement dans le sens des axes de rotation (5, 7).

7. Dispositif selon l'une quelconque des revendications 1 à 6, **caractérisé en ce que** le déflecteur d'air (1) est courbé.

8. Dispositif selon l'une quelconque des revendications 1 à 7,
**caractérisé en ce qu'**un tissu à mailles fines est disposé entre le déflecteur d'air (1) et le cadre de toit (2).

9. Dispositif selon la revendication 8, **caractérisé en ce que** le tissu à mailles fines peut être enroulé sur le déflecteur d'air (1) et / ou sur le cadre de toit (2).
